# NEUE EUROPÄISCHE PATENTSCHRIFT

(11) **EP 1 525 956 B2**
(45) Veröffentlichungstag und Bekanntmachung des Hinweises auf die Entscheidung über den Einspruch: **16.01.2013**
(45) Hinweis auf die Patenterteilung: 10.12.2008
(21) Anmeldenummer: 04024590.4
(22) Anmeldetag: 15.10.2004
(51) Int. Cl.: B25J 19/00

(54) **Vorrichtung mit relativ zueinander drehbaren Teilen und einer Dichtungsanordnung**
Device with rotating elements and a sealing arrangement
Dispositif avec des éléments rotatifs et un agencement pour l'étanchéité

(30) Priorität: 21.10.2003 DE 10348841
(43) Veröffentlichungstag der Anmeldung: 27.04.2005
(73) Patentinhaber: KUKA Roboter GmbH, 86165 Augsburg (DE)
(72) Erfinder: Markert, Joachim, 86163 Augsburg (DE); Merk, Günther, 86450 Altenmünster (DE)
(74) Vertreter: Patentanwälte Funk & Böss GbR

(56) Entgegenhaltungen:
- CH-A- 547 455
- JP-A- 05 084 691
- US-A- 3 591 188
- US-A- 4 900 039
- US-A- 4 904 148
- US-A- 5 676 472

## Beschreibung

Die Erfindung betrifft einen Mehrachs-Industrieroboter gemäß Anspruch 1.

Handhabungsgeräte in Form von Mehrachs-Industrierobotern, wie sie heutzutage bei einer Vielzahl industrieller Anwendungen zum Einsatz kommen, weisen regelmäßig eine Vielzahl von relativ zueinander drehbeweglichen Teilen auf. Um zu verhindern, dass an den notwendigerweise offenen Schnittstellen derartiger relativ zueinander beweglicher Teile zum einen Schmutz, wie beispielsweise Staub, oder Feuchtigkeit in das Innere des Roboters eindringen oder andererseits Schmierstoffdämpfe, Abriebpartikel oder dergleichen aus dem Roboter in die Umgebung freigesetzt werden können, sind bei derartigen Getrieben an den Schnittstellen regelmäßig Dichtungen angeordnet.

Ein Getriebe eines Mehrachs-Industrieroboters ist beispielsweise aus der EP-A2-0 934 805 bekannt. Der Gegenstand der genannten Druckschrift weist eine Vielzahl von relativ zueinander drehbaren Achsen und Gehäuseteilen auf, wobei zwischen diesen jeweils eine Dichtung in Form eines Dichtrings angeordnet ist. Mittels der Dichtungen soll ein Eindringen von Feuchtigkeit und Staub von außen in den Roboter verhindert werden, so dass dieser ohne ein Beschädigungsrisiko für seine inneren Bestandteile auch in der Nahrungsmittel verarbeitenden Industrie eingesetzt werden kann.

Insbesondere ist hierbei als nachteilig anzusehen, dass es schon bei einer geringfügigen Beschädigung einer der Dichtungen sowohl zu einem Eintreten von Feuchtigkeit und Verschmutzungen in den Roboter als auch zu einem Austreten von Stoffen, wie Schmierstoffdämpfen oder Abriebpartikeln aus dem Roboter in den Umgebungsraum kommen kann, was insbesondere in der Nahrungsmittelindustrie zu erheblichen Problemen mit entsprechenden Kostenfolgen aufgrund einer Kontamination der zu verarbeitenden Nahrungsmittel führen kann.

Darüber hinaus sind z.B. Wellendichtungen bekannt, bei welchen Dichtungselemente mit mehreren Komponenten zu Abdich-tungszwecken vorgesehen sind. So beschreibt die CH-A-547 455 eine Wellendichtung, bei der eine Welle mit einer Buchse drehfest verbunden ist, die mittels eines Wälzlagers in einem zylindrischen Gehäuse gelagert ist. Innerhalb einer Verlängerung einer zylindrischen Wandung des Dichtungsge-häuses sind ein Dichtungselement in Form von zwei als Simmerringe^{®} ausgebildeten Dichtringen, deren Dichtungslippen in entgegengesetzte Richtungen weisen sowie ein dichtungselement in form einer labyrinthdichtung angeordnet.

Die JP 05-084 691 A beschreibt einen Mehrachs-Industrieroboter aufweisend ein Getriebe mit mindestens zwei relativ zueinander drehbaren Teilen, wobei zwischen den relativ zueinander drehbaren Teilen mindestens zwei Dichtungen angeordnet sind, und wobei eine der Dichtungen als eine gegen einen Außenraum konkav gewölbte, von außen an einem der Teile anliegende Dichtlippe ausgebildet ist.

Der Erfindung liegt die Aufgabe zugrunde, ein Mehrachs-Industrieroboter dahingehend weiterzubilden, dass es auch in einer kontaminationsgefährdeten Umgebung sicher einsetzbar ist und zugleich innere Bestandteile des Getriebes vor Umgebungseinflüssen geschützt sind.

Diese Aufgabe wird erfindungsgemäß mit einem Mehrachs-Industrieroboter gemäß Anspruch 1 gelöst.

Auf diese Weise kann im Falle eines Versagens einer der Dichtungen die zweite Dichtung deren Funktion mit übernehmen, so dass eine Dichtungsanordnung gebildet ist, welche ein Eindringen von Schadstoffen in das Getriebe sowie ein Ausdringen von kontaminierenden Stoffen in einen Arbeitsbereich des Mehrachs-Industrieroboters sicher unterbindet. Darüber hinaus ist vorgesehen, dass eine der Dichtungen als eine von außen an dem einen Teil anliegende Dichtlippe ausgebildet ist, die eine gegen einen Außenraum des Getriebes konkav gewölbte Ausbildung besitzt, so dass insbesondere bei Reinigungsvorgängen, z.B. mittels einer HochdruckReinigungseinrichtung, ein Eindringen von Stoffen in das Getriebe erschwert und generell eine Bildung von Schmutzräumen unterbunden ist.

In einer Weiterbildung ist vorgesehen, dass die Dichtungen im Wesentlichen ringförmig ausgebildet sind, wobei sie vorzugsweise konzentrisch angeordnet sein können. Auf diese Weise lassen sich bei relativ zueinander drehbaren und daher in der Regel rotationssymmetrisch ausgebildeten Teilen besonders einfache und effiziente Abdichtungen erreichen.

Im Rahmen eines erfindungsgemäßen Mehrachs-Industrieroboters ist vorgesehen, dass das erste Teil an seiner dem zweiten Teil zugewandten Stirnseite eine erste und eine zweite Ausnehmung aufweist, mit denen entsprechende komplementäre erste und zweite Vorsprünge des zweiten Teils in Eingriff stehen. Um einen derartigen Mehrachs-Industrieroboter eine sichere Abdichtung zwischen den relativ zueinander drehbaren Teilen zu verleihen, ist eine Dichtung zwischen einer Begrenzungsfläche des ersten Vorsprungs und einer Begrenzungsfläche der ersten Ausnehmung und die andere Dichtung zwischen Begrenzungsflächen der zweiten Ausnehmung und des zweiten Vorsprungs angeordnet.

Um eine einfache Geometrie der Dichtflächen zu erhalten, weisen der erste Vorsprung und die erste Ausnehmung in einer äußerst bevorzugten Weiterbildung der Erfindung eine im Wesentlichen kreizylindrische Form auf. Aus dem gleichen Grund können der zweite Vorsprung und die zweite Ausnehmung im Wesentlichen ringförmig ausgebildet sein. Der zweite Vorsprung und die zweite Ausnehmung können den ersten Vorsprung und die erste Ausnehmung jeweils konzentrisch umgeben.

In einer Weiterbildung des erfindungsgemäßen Mehrachs-Industrieroboter ist zwischen den Dichtungen ein im Wesentlichen abgeschlossener Spaltraum gebildet, der vorteilhafterweise mit Druck beaufschlagbar ist. Auf diese Weise ist es zum einen möglich, die Dichtungen während bereits oben angesprochenen Reinigungsvorgängen, beispielsweise mittels einer HochdruckReinigungseinrichtung, von Innen zu unterstützen, um ein Eindringen von Reinigungsmitteln in das Getriebe zu unterbinden. Andererseits lässt sich auf diese Weise der Raum zwischen den Dichtungen mit einem Fluid, wie einer Entkeimungslösung, spülen, um auf diese Weise einer Keimbildung im Innern des Getriebes und einer anschließenden Kontaminierung der Umgebung vorzubeugen.

Zum Gewährleisten einer Dichtwirkung insbesondere der inneren Dichtung bei Druckbeaufschlagung des Spaltraums kann weiterhin vorgesehen sein, dass eine der Dichtungen zumindest auf ihrer dem Spaltraum abgewandten Seite ein konkaves Profil aufweist. Zur weiteren Verbesserung der Einsatzmöglichkeiten eines erfindungsgemäßen Mehrachs-Industrieroboter für kontaminationsgefährdete Anwendungen, wie in der Lebensmittelindustrie, sind die Dichtungen vorzugsweise in PTFE (Polytetrafluorethylen) oder einem vergleichbaren schadstoffreduzierten Material, beispielsweise Fluor-Elastomer, Ethylen-Propylen-Dien-Kautschuk (EPDM; ebenfalls ein Elastomer) oder Polyoxymethylen (POM; ein Thermoplast), ausgebildet.

In einer äußerst bevorzugten, konkreten Weiterbildung des erfindungsgemäßen Mehrachs-Industrieroboter ist vorgesehen, dass eines der relativ zueinander drehbaren Teile als Gehäuse des Getriebes ausgebildet ist und das andere Teil aus diesem austritt, insbesondere in Form einer Antriebs- oder Abtriebswelle.

Weitere Eigenschaften und Vorteile der Erfindung ergeben sich aus der nachfolgenden Beschreibung von Ausführungsbeispielen anhand der Zeichnung. Es zeigen:
- Fig. 1: eine Seitenansicht eines Mehrachs-Industrieroboters;
- Fig. 2: eine schematische Darstellung eines Getriebes;
- Fig. 3: eine detaillierte, ausschnittsweise Schnittdarstellung einer ersten Ausgestaltung des Getriebes;
- Fig. 4: eine detaillierte, ausschnittsweise Schnittdarstellung einer zweiten Ausgestaltung des Getriebes;
- Fig. 5: eine detaillierte, ausschnittsweise Darstellung einer weiteren Ausgestaltung des Getriebes; und
- Fig. 6: eine detaillierte, ausschnittsweise Darstellung einer weiteren Ausgestaltung des Getriebes.

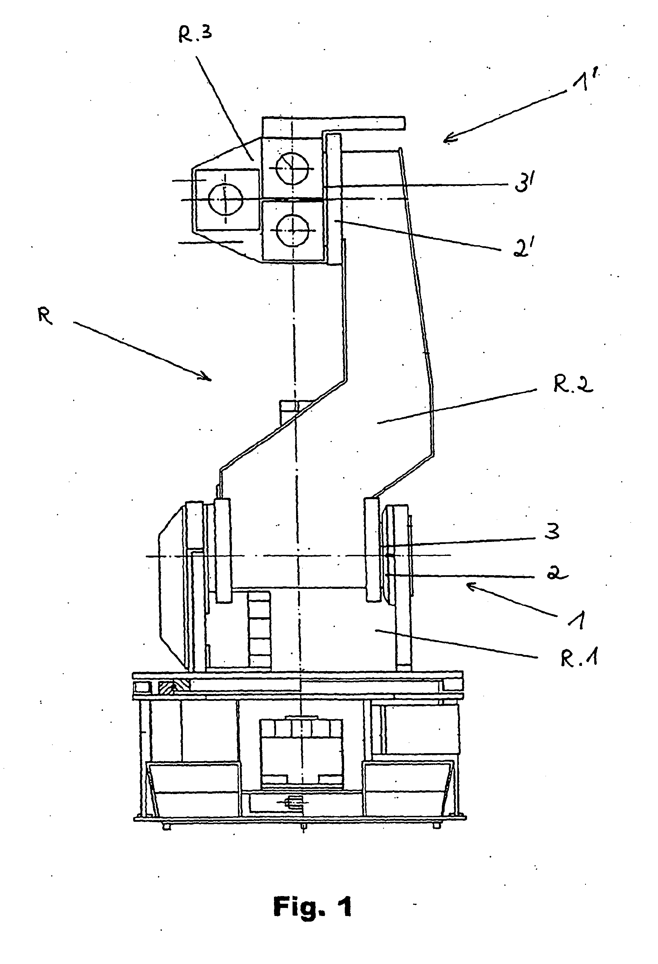

Die Fig. 1 zeigt einen Mehrachs-Industrieroboter R in rückseitiger Darstellung. Zumindest in seinen Gelenkbereichen zwischen Gestell R.1 und Schwinge R.2 bzw. Schwinge und Arm R.3 weist der Roboter R ein Getriebe 1, 1' mit relativ zueinander drehbaren Teilen 2, 3 bzw. 2', 3' auf.

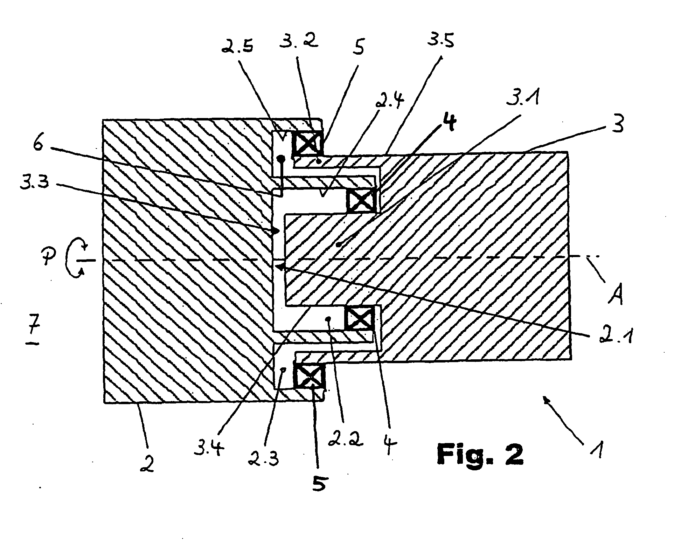

Die Fig. 2 zeigt in einer schematischen Schnittdarstellung ein Getriebe 1 mit einem ersten Teil 2 und einem zweiten Teil 3, die relativ zueinander um eine Achse A des Getriebes 1 drehbar sind (Pfeil P in Fig. 2). Bei den gezeigten Teilen 2, 3 kann es sich beispielsweise um ein Getriebegehäuse 2 und eine An- oder Abtriebswelle 3 bei einem Mehrachs-Industrieroboter (nicht gezeigt) handeln. Das erste Teil 2 weist auf seiner dem Teil 3 zugewandten Stirnseite 2.1 eine erste Ausnehmung 2.2 und eine zweite Ausnehmung 2.3 auf, mit denen entsprechende komplementäre erste und zweite Vorsprünge 3.1, 3.2 an einer Stirnseite 3.3 des zweiten Teils 3 in Eingriff stehen. Weiterhin weisen gemäß der Fig. 2 der erste Vorsprung 3.1 und die erste Ausnehmung 2.2 eine im Wesentlichen kreiszylindrische Form auf, während der zweite Vorsprung 3.2 und die zweite Ausnehmung 2.3 im Wesentlichen ringförmig ausgebildet sind. Dabei umgeben der zweite Vorsprung 3.2 und die zweite Ausnehmung 2.3 den ersten Vorsprung 3.1 und die erste Ausnehmung 2.2 jeweils konzentrisch bezüglich der Achse A.

Zwischen einer äußeren Begrenzungsfläche 3.4 des ersten Vorsprungs 3.1 und einer inneren Begrenzungsfläche 2.4 der ersten Ausnehmung 2.2 ist eine erste ringförmige Dichtung 4 angeordnet. Konzentrisch zu der Dichtung 4 ist eine zweite, ebenfalls ringförmige Dichtung 5 zwischen einer inneren Begrenzungsfläche 2.5 der zweiten Ausnehmung 2.3 und einer äußeren Begrenzungsfläche 3.5 des zweiten Vorsprungs 3.2 angeordnet. Gemäß der Ausgestaltung der Fig. 2 ergibt sich so eine grundsätzlich konzentrische - wenn auch gegebenenfalls axial versetzte - Anordnung der Dichtungen 4, 5 bezüglich der Achse A des Getriebes 1. Weiterhin weisen gemäß der Fig. 2 der erste Vorsprung 3.1 und die erste Ausnehmung 2.2 eine im Wesentlichen kreiszylindrische Form auf, während der zweite Vorsprung 3.2 und die zweite Ausnehmung 2.3 im Wesentlichen ringförmig ausgebildet sind. Dabei umgeben der zweite Vorsprung 3.2 und die zweite Ausnehmung 2.3 den ersten Vorsprung 3.1 und die erste Ausnehmung 2.2 jeweils konzentrisch bezüglich der Achse A. Ferner ist der Fig. 2 entnehmbar, dass zwischen den Dichtungen 4, 5 ein im Wesentlichen abgeschlossener Spaltraum 6 gebildet ist, der im Falle der gezeigten speziellen Ausgestaltung und Anordnung der Vorsprünge 3.1, 3.2 und Ausnehmungen 2.2, 2.3 einen angenähert S-förmigen Querschnitt besitzt.

Im Falle der vorstehend genannten Ausbildung des ersten Teils 2 als Gehäuseteil und des zweiten Teils 3 als Anoder Abtriebswelle des Getriebes liegen gemäß der Fig. 2 beide Dichtungen 4, 5 zwischen dem - in der Regel - stehenden Gehäuse und dem relativ dazu drehenden An- oder Abtrieb. Im Zuge einer solchen Ausgestaltung kann es sich bei der inneren Dichtung 4 um eine gewöhnliche, dem Fachmann bekannte Getriebedichtung handeln. Die zusätzlich vorgesehene, äußere Dichtung 5 ist vorzugsweise in einem lebensmitteltauglichen Material, beispielsweise in PTFE, EPDM, POM oder Fluor-Elastomer, ausgebildet. Gemäß der Darstellung der Fig. 2 hält die innere Dichtung 4 einen Getriebeschmierstoff zurück und verhindert so eine Kontamination der Umgebung, während die äußere Dichtung 5 ein Eindringen von Wasser und Schmutz in das Getriebe 1 verhindert. Der zwischen den Dichtungen 4, 5 liegende Spaltraum 6 unterstützt beide Dichtungen, während im Falle eines Versagens einer der Dichtungen 4, 5 die jeweils andere deren Schutzfunktion mit übernimmt. Das so geschaffene Getriebe 1 ist somit aufgrund seiner speziellen Dichtungsanordnung 4, 5 insbesondere zum Einsatz in der Nahrungsmittel verarbeitenden Industrie geeignet.

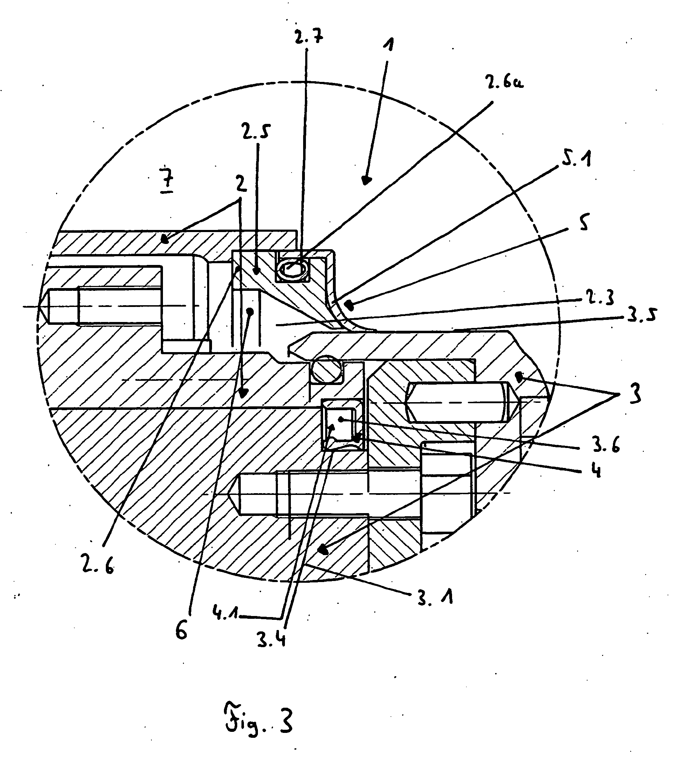

Die Fig. 3 bis 6 zeigen detailliert konkrete weitere Ausgestaltungen des Getriebes, wobei zum Vergleich mit der schematischen Darstellung der Fig. 2 entsprechende Bestandteile mit denselben Bezugszeichen versehen sind.

Gemäß der Fig. 3 ist die äußere Dichtung 5 als eine einfache umlaufende Dichtlippe 5.1 ausgebildet, die gegen einen Außenraum 7, beispielsweise einen Arbeitsraum eines Roboters, derart konkav gewölbt, ausgebildet ist, dass generell ein Entstehen von Schmutzräumen unterbunden ist, und die an der äußeren Begrenzungsfläche 3.5 des zweiten Teils 3 des Getriebes 1 anliegt. Auf diese Weise wird eine gute Dichtwirkung auch bei Druckeinwirkung auf die Dichtung 5 von außen erzielt, beispielsweise wenn das Getriebe 1 mittels eines Reinigungsgeräts gesäubert wird. Die Dichtlippe 5.1 ist gemäß der Fig. 3 zwischen einer inneren Begrenzungsfläche 2.5 der äußeren Ausnehmung 2.3 und einem in der Ausnehmung 2.3 angeordneten ringförmigen Einsatzmittel 2.6 angeordnet und mittels eines in einer umlaufenden Nut 2.6a des Einsatzmittels 2.6 angeordneten ringförmigen Haltemittels 2.7 gehalten.

Die innere Dichtung 4 ist beim Gegenstand der Fig. 3 als ringförmige Dichtung mit einem im Wesentlichen U-förmigen Profil ausgebildet und derart angeordnet, dass sie auf ihrer dem Spaltraum 6 abgewandten Seite 4.1 ein konkaves Profil aufweist, durch das Schmutzräume vermieden werden. Zum Aufnehmen der Dichtung 4 weist der Vorsprung 3.1 des drehenden (Abtrieb-)Teils 3 in seiner äußeren Begrenzungsfläche 3.4 eine umlaufende Ausnehmung 3.6 auf.

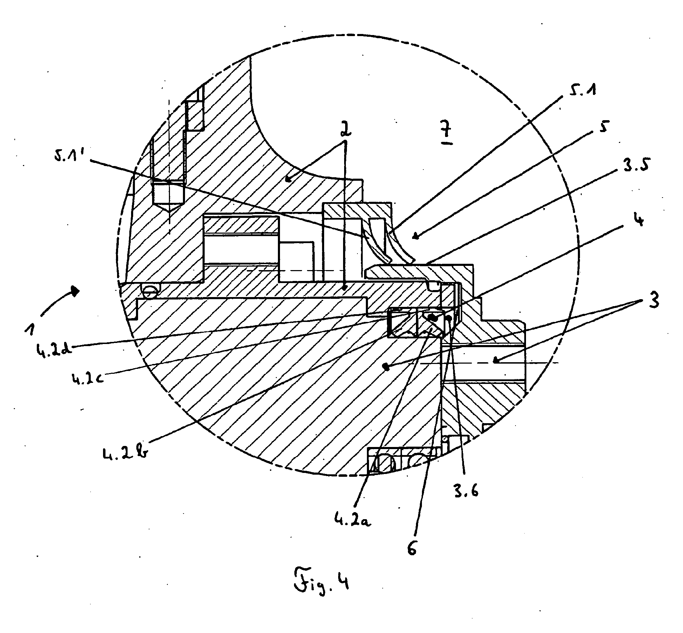

Gemäß der in der Fig. 4 gezeigten Ausgestaltung eines Getriebes ist die äußere Dichtung 5 mit zwei im wesentlichen zueinander parallelen Dichtlippen 5.1, 5.1' ausgebildet und ohne Einsatzmittel 2.6 (Fig. 3) zwischen dem ersten Teil 2 und dem zweiten Teil 3 angeordnet. Die innere Dichtung 4 weist im Zuge dieser Ausgestaltung ein doppelt U-förmiges Profil auf, wobei freie Schenkel 4.2a-d der innere Dichtung 4 derart angeordnet sind, dass diese sowohl auf ihrer dem Spaltraum 6 zugewandten Seite als auch auf ihrer dem Spaltraum 6 abgewandten Seite 4.1 bzw. 4.2 ein konkaves Profil aufweist.

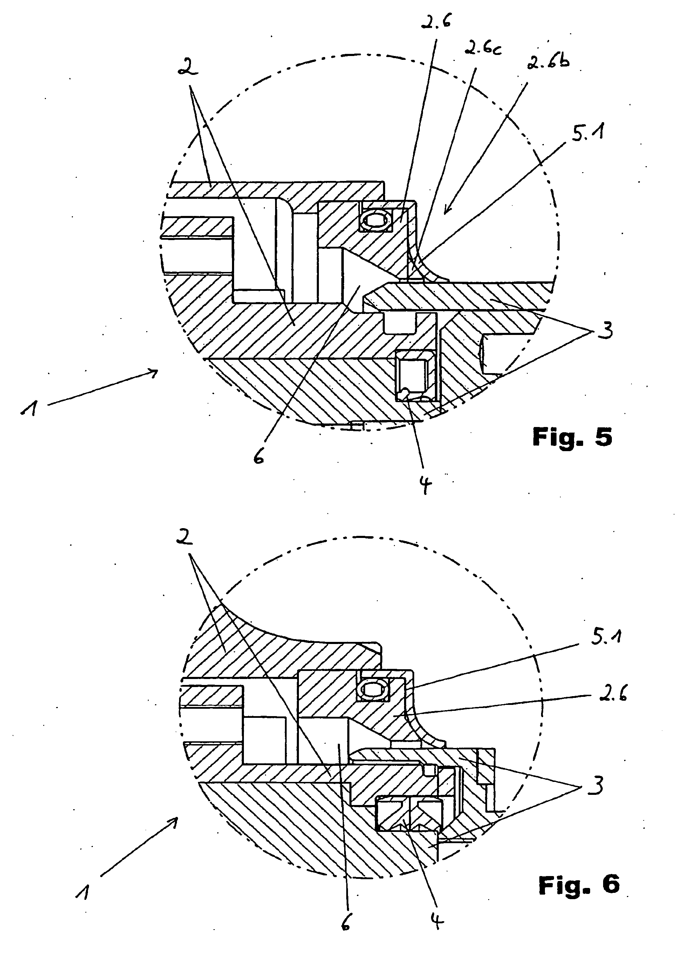

Beim Gegenstand der Fig. 5 ist im Unterschied zur Fig. 3 das Einsatzmittel 2.6 nicht einstückig ausgebildet, sondern im Bereich seiner äußeren Stirnseite 2.6b mit einem ringförmigen, im Querschnitt keilförmigen Ansatzstück 2.6c versehen, über das die Wölbung der Dichtlippe 5.1 anpassbar ist. Aus Gründen der Übersichtlichkeit sind in Fig. 5 wie auch in Fig. 6 nicht alle Bezugszeichen eingetragen (vgl. Fig. 3, 4).

Die Fig. 6 zeigt im Wesentlichen ein der Fig. 3 entsprechendes Getriebe 1, jedoch mit einer inneren Dichtung 4 gemäß der Fig. 4.

### Bezugszeichenliste

- 1, 1': Vorrichtung
- 2, 2': erstes Teil, Gehäuse
- 2.1: Stirnseite
- 2.2: Ausnehmung
- 2.3: Ausnehmung
- 2.4: Begrenzungsfläche
- 2.5: Begrenzungsfläche
- 2.6: Einsatzmittel
- 2.6a: Nut
- 2.6b: Stirnseite
- 2.6c: Ansatzstück
- 2.7: Haltemittel
- 3, 3': Abtrieb
- 3.1: Vorsprung
- 3.2: Vorsprung
- 3.3: Stirnseite
- 3.4: Begrenzungsfläche
- 3.5: Begrenzungsfläche
- 3.6: Ausnehmung
- 4: Dichtung
- 4.1: Seite
- 4.2a-d: freier Schenkel
- 5: Dichtung
- 5.1, 5.1': Dichtlippe
- 6: Spaltraum
- 7: Außenbereich, Umgebung
- A: Achse
- P: Drehung
- R: Roboter
- R.1: Gestell
- R.2: Schwinge
- R.3: Arm

## Patentansprüche

1. Mehrachs-Industrieroboter aufweisend ein Getriebe mit mindestens zwei relativ zueinander drehbaren Teilen (2, 3), wobei zwischen den relativ zueinander drehbaren Teilen (2, 3) mindestens zwei Dichtungen (4, 5) angeordnet sind, und wobei eine der Dichtungen (5) als eine gegen einen Außenraum (7) konkav gewölbte, von außen an einem der Teile (3) anliegende Dichtlippe (5.1, 5.1') ausgebildet ist und das erste Teil (2) an seiner dem zweiten Teil (3) zugewandten Stirnseite (2.1) eine erste (2.2) und eine zweite Ausnehmung (2.3) aufweist, mit denen entsprechenden komplementäre erste und zweite Vorsprünge (3.1, 3.2) des zweiten Teils (3) in Eingriff stehen und die eine Dichtung (4) zwischen einer Begrenzungsfläche (3.4) des ersten Vorsprungs (3.1) und einer Begrenzungsfläche (2.4) der ersten Ausnehmung (2.2) und die andere Dichtung (5) zwischen Begrenzungsflächen (2.5, 3.5) der zweiten Ausnehmung (2.3) und des zweiten Vorsprungs (3.2) angeordnet ist.

2. Mehrachs-Industrieroboter nach Anspruch 1, **dadurch gekennzeichnet, dass** die Dichtungen (4, 5) im Wesentlichen ringförmig ausgebildet sind.

3. Mehrachs-Industrieroboter nach Anspruch 2, **dadurch gekennzeichnet, dass** die Dichtungen (4, 5) konzentrisch angeordnet sind.

4. Mehrachs-Industrieroboter nach Anspruch 1 bis 3, **dadurch gekennzeichnet, dass** der erste Vorsprung (3.1) und die erste Ausnehmung (2.2) im Wesentlichen eine kreiszylindrische Form aufweisen.

5. Mehrachs-Industrieroboter nach einem der Ansprüche 1 bis 4, **dadurch gekennzeichnet, dass** der zweite Vorsprung (3.2) und die zweite Ausnehmung (2.3) im Wesentlichen ringförmig ausgebildet sind.

6. Mehrachs-Industrieroboter nach einem der Ansprüche 1 bis 5, **dadurch gekennzeichnet, dass** der zweite Vorsprung (3.2) und die zweite Ausnehmung (2.3) den ersten Vorsprung (3.1) und die erste Ausnehmung (2.2) jeweils konzentrisch umgeben.

7. Mehrachs-Industrieroboter nach einem der Ansprüche 1 bis 6, **dadurch gekennzeichnet, dass** zwischen den Dichtungen (4, 5) ein im Wesentlichen abgeschlossener Spaltraum (6) gebildet ist.

8. Mehrachs-Industrieroboter nach einem der Ansprüche 1 bis 7, **dadurch gekennzeichnet, dass** zumindest die weitere Dichtung (5) zum Vermeiden von Schmutzräumen ausgebildet ist.

9. Mehrachs-Industrieroboter nach Anspruch 7 oder 8, **dadurch gekennzeichnet, dass** eine der Dichtungen (4) zumindest auf ihrer dem Spaltraum (6) abgewandten Seite (4.1) ein konkaves Profil aufweist.

10. Mehrachs-Industrieroboter nach einem der Ansprüche 1 bis 9, **dadurch gekennzeichnet, dass** zumindest eine der Dichtungen (4, 5) in Polytetrafluorethylen (PTFE), Ethylen-Propylen-Dien-Kautschuk (EPDM), Polyoxymethylen (POM) oder Fluor-Elastomer ausgebildet ist.

11. Mehrachs-Industrieroboter nach einem der Ansprüche 1 bis 10, **dadurch gekennzeichnet, dass** der Spaltraum (6) mit Druck beaufschlagbar ist.

12. Mehrachs-Industrieroboter nach einem der vorangehenden Ansprüche, **dadurch gekennzeichnet, dass** eines (2) der relativ zueinander drehbaren Teile (2, 3) als Gehäuse des Getriebes ausgebindet ist und das andere Teil (3) aus dem Gehäuseteil (2) austritt, insbesondere in Form einer Antriebs- oder Abtriebswelle.

## Claims

1. Multi-axle industrial robot comprising a gear unit with at least two parts (2, 3) that are rotatable relative to one another, wherein at least two seals (4, 5) are arranged between the relatively rotatable parts (2, 3), and wherein one of the seals (5) is configured as a sealing lip (5.1, 5.1') curved concavely against an outer chamber (7) and bearing from the outside against one of the parts (3), and the first part (2) on its end side (2.1) facing the second part (3) comprises a first (2.2) and a second recess (2.3), with which corresponding complementary first and second projections (3.1, 3.2) of the second part (3) are in engagement, and one seal (4) is arranged between a delimiting surface (3.4) of the first projection (3.1) and a delimiting surface (2.4) of the first recess (2.2) and the other seal (5) is arranged between delimiting surfaces (2.5, 3.5) of the second recess (2.3) and the second projection (3.2).

2. Multi-axle industrial robot according to claim 1, **characterised in that** the seals (4, 5) are configured to be essentially annular.

3. Multi-axle industrial robot according to claim 2, **characterised in that** the seals (4, 5) are arranged concentrically.

4. Multi-axle industrial robot according to claim 1 to 3, **characterised in that** the first projection (3.1) and the first recess (2.2) have essentially a circular cylindrical form.

5. Multi-axle industrial robot according to any one of claims 1 to 4, **characterised in that** the second projection (3.2) and the second recess (2.3) are configured to be essentially annular.

6. Multi-axle industrial robot according to any one of claims 1 to 5, **characterised in that** the second projection (3.2) and the second recess (2.3) concentrically surround the first projection (3.1) and the first recess (2.2).

7. Multi-axle industrial robot according to any one of claims 1 to 6, **characterised in that** an essentially sealed gap (6) is formed between the seals (4, 5).

8. Multi-axle industrial robot according to any one of claims 1 to 7, **characterised in that** at least the additional seal (5) is provided to avoid areas of dirt.

9. Multi-axle industrial robot according to claim 7 or 8, **characterised in that** one of the seals (4) has a concave profile at least on its side (4.1) averted from the gap (6).

10. Multi-axle industrial robot according to any one of claims 1 to 9, **characterised in that** at least one of the seals (4, 5) is made in polytetrafluoroethylene (PTFE), ethylene propylene diene rubber (EPDM), polyoxymethylene (POM) or fluoroelastomer.

11. Multi-axle industrial robot according to any one of claims 1 to 10, **characterised in that** the gap (6) can be charged with pressure.

12. Multi-axle industrial robot according to any one of the preceding claims, **characterised in that** one (2) of the relatively rotatable parts (2, 3) is configured as a housing of the gear unit and the other part (3) leaves the housing part (2), in particular in the form of a drive shaft or driven shaft.

## Revendications

1. Robot industriel à axes multiples, présentant un engrenage avec au moins deux parties (2, 3) rotatives l'une par rapport à l'autre, deux joints (4, 5) au moins étant placés entre les pièces (2, 3) rotatives l'une par rapport à l'autre, un des joints (5) étant formé par une lèvre d'étanchéité (5.1, 5.1') en cuvette contre une zone extérieure (7) et apposée depuis l'extérieur contre une des pièces (3), et la première pièce (2) présentant sur sa face frontale (2.1) tournée vers la deuxième pièce (3) un premier creux (2.2) et un deuxième creux (2.3) dans lesquels sont en prise des première et deuxième saillies (3.1., 3.2) complémentaires correspondantes de la deuxième pièce (3), et l'un des joints (4) étant placé entre une périphérie (3.4) de la première saillie (3.1) et une périphérie (3.4) du premier creux (2.2) et l'autre joint (5) étant placé entre des périphéries (2.5, 3.5) du deuxième creux (2.3) et de la deuxième saillie (3.2).

2. Robot industriel à axes multiples selon la revendication 1, **caractérisé en ce que** les joints (4,5) sont réalisés de forme sensiblement annulaire.

3. Robot industriel à axes multiples selon la revendication 2, **caractérisé en ce que** les joints (4, 5) sont agencés de manière concentrique.

4. Robot industriel à axes multiples selon l'une des revendications 1 à 3, **caractérisé en ce que** la première saillie (3.1) et le premier creux (2.2) présentent une forme sensiblement cylindrique circulaire.

5. Robot industriel à axes multiples selon l'une des revendications 1 à 4, **caractérisé en ce que** la deuxième saillie (3.2) et le deuxième creux (2.3) sont réalisés de forme sensiblement annulaire.

6. Robot industriel à axes multiples selon l'une des revendications 1 à 5, **caractérisé en ce que** la deuxième saillie (3.2) et le deuxième creux (2.3) entourent de manière concentrique la première saillie (3.1) et le premier creux (2.2) respectivement.

7. Robot industriel à axes multiples selon l'une des revendications 1 à 6, **caractérisé en ce qu'**entre les joints (4, 5) est formé un interstice (6) sensiblement fermé.

8. Robot industriel à axes multiples selon l'une des revendications 1 à 7, **caractérisé en ce qu'**au moins l'autre joint (5) est réalisée de manière à éviter des espaces d'encrassement.

9. Robot industriel à axes multiples selon les revendications 7 ou 8, **caractérisé en ce qu'**un des joints (4) présente au moins sur sa face (4.1) détournée de l'interstice (6) un profil concave.

10. Robot industriel à axes multiples selon l'une des revendications 1 à 9, **caractérisé en ce qu'**au moins un des joints (4, 5) est réalisés en polytétrafluoroéthylène (PTFE), en éthylène-propylène-diène-caoutchouc (EPDM) en polyoxyméthylène (PCM) ou en fluorélastomère.

11. Robot industriel à axes multiples selon l'une des revendications 1 à 10, **caractérisé en ce que** l'interstice (6) est sollicité par de la pression.

12. Robot industriel à axes multiples selon l'une des revendications précédentes, **caractérisé en ce qu'**une (2) des pièces (2, 3) rotatives l'une par rapport à l'autre est réalisée en tant que carter pour le l'engrenage, et **en ce que** l'autre pièce (3) sort de la partie formant carter (2), en particulier sous forme d'un arbre d'entraînement ou de sortie.
